# NOUVEAU FASCICULE DE BREVET EUROPEEN

(11) **EP 1 278 797 B2**
(45) Date de publication et mention de la décision concernant l'opposition: **05.10.2016**
(45) Mention de la délivrance du brevet: 22.12.2004
(21) Numéro de dépôt: 01917092.7
(22) Date de dépôt: 15.03.2001
(51) Int. Cl.: C08K 5/20, C08L 23/04, B65D 41/04

(54) **CAPSULES À VISSER POUR BOUTEILLES À BASE DE POLYÉTHYLÈNE**
SCHRAUBKAPSELN FÜR FLASCHEN AUS POLYETHYLEN
THREADED BOTTLE CAPS MADE OF POLYETHYLENE

(30) Priorité: 22.03.2000 EP 00201031
(43) Date de publication de la demande: 29.01.2003
(73) Titulaire: INEOS Manufacturing Belgium NV, 2040 Antwerpen (BE)
(72) Inventeur: VANDEN BERGHE, Pascal, B-1300 LIMAL (BE); PLUME, Denis, B-1030 BRUXELLES (BE)
(74) Mandataire: Smith, Julian Philip Howard
(86) Numéro de dépôt international: PCT/EP2001/002968
(87) Numéro de publication internationale: WO 2001/070872

(56) Documents cités:
- EP-A- 0 305 116
- EP-A- 0 310 092
- EP-A- 0 687 706
- GB-A- 792 009
- US-A- 4 454 272
- US-A- 4 701 487
- US-A- 4 764 326
- US-A- 5 948 846

## Description

L'invention concerne les capsules à visser pour bouteilles susceptibles d'être fabriquées par injection à partir d'une composition à base de polyéthylène.

Il est généralement connu de fabriquer des capsules pour bouteilles à partir de polyéthylène. Afin d'optimiser les propriétés de glissance et de faciliter le dévissage de la capsule, il est également connu d'incorporer, dans le polyéthylène, un agent lubrifiant. Le brevet US 5,948,846 décrit l'utilisation d'une composition comprenant du 13-docosénamide comme agent lubrifiant pour la fabrication de capsules. Cette composition présente toutefois le désavantage de procurer une mauvaise odeur et un mauvais goût aux aliments stockés en contact avec les capsules à base de cette composition. Ce problème a été résolu en ajoutant aux compositions une quantité d'une zéolite particulière en tant que capteur de goût et d'odeur.

On a maintenant trouvé une composition qui ne présente pas les inconvénients précités sans qu'elle ne nécessite l'utilisation d'un capteur d'odeur et de goût tel qu'une zéolite et qui donne de bonnes propriétés de glissance.

A cet effet, l'invention concerne une capsule à visser pour bouteilles susceptible d'être fabriquée par injection d'une composition constituée d'au moins 94,5 % en poids de polyéthylène ayant une masse volumique standard supérieure à 940 kg/m³, de 0,08 à 0,5 % en poids d'au moins un amide d'acide gras saturé contenant de 8 à 30 atomes de carbone, de 0 à 0,1 % en poids d'agent lubrifiant auxiliaire choisi parmi les acides gras, les polyols contenant au moins 4 atomes de carbone, les monoéthers de mono- ou polyalcool, les paraffines, les polysiloxanes, les polymères fluorés et leurs mélanges, 0 à 5 % en poids d'un ou plusieurs additifs choisi(s) parmi les anti-oxydants, les anti-acides, les anti-UV, les colorants et les agents antistatiques, la somme des pourcentages relatifs aux composés susmentionés étant égale à 100%.

Par polyéthylène, on entend désigner les homopolymères de l'éthylène et les copolymères de l'éthylène avec un ou plusieurs comonomères, ainsi que leurs mélanges. Les comonomères sont habituellement des α-oléfines comprenant de 3 à 12 atomes de carbone. Les comonomères préférés sont le butène-1 et l'hexène-1; le butène-1 est particulièrement préféré. En général, la quantité de comonomère dans le copolymère est au moins égale à 0,01 mol %, en particulier au moins égale à 0,05 mol %, les quantités d'au moins 0,15 mol % étant les plus avantageuses. La quantité de comonomère est habituellement au maximum égale à 5 mol %, plus précisément au maximum égale à 3 mol %, les quantités d'au plus 1 mol % étant recommandées. On obtient des résultats particulièrement performants avec des quantités de comonomère de 0,1 à 0,7 mol %.

Le polyéthylène mis en oeuvre dans la présente invention présente une masse volumique standard (MVS) supérieure à 940 kg/m³. Dans le cadre de la présente invention, la MVS est mesurée selon la norme ISO1183-3 (1999). Elle est de préférence d'au moins 948 kg/m³. Généralement, la MVS ne dépasse pas 960 kg/m³.

Le plus souvent, le polyéthylène est en outre caractérisé par un indice de fluidité (MI₂), mesuré à 190°C sous une charge de 2,16 kg selon la norme ASTM D 1238 (1998), d'au moins 0,05 g/10 min, en particulier d'au moins 0,1 g/10 min; les valeurs d'au moins 0,2 g/10 min étant les plus courantes. L'indice de fluidité ne dépasse pas, en général, 10 g/10 min, de préférence pas 8 g/10 min; les valeurs d'au plus égales à 5 g/10 min étant recommandées. Les indices de fluidité de 1 à 3 g/10 min, par exemple environ 2 g/10 min sont préférés.

La composition mise en oeuvre dans l'invention comprend au moins un amide d'acide gras saturé contenant de 8 à 30 atomes de carbone. Les amides d'acides gras saturés sont de préférence les amides d'acides gras linéaires représentés par la formule CH₃(CH₂)ₙCONH₂ dans laquelle n = 6 à 28. Les amides d'acide gras saturés et linéaires contenant au moins 12 atomes de carbone et leurs mélanges sont recommandés. Le béhénamide est particulièrement préféré.

La teneur en amide d'acide gras saturé dans la composition est d'au moins 0,08 % en poids. Généralement, cette teneur ne dépasse pas 0,4 % en poids. De préférence, cette teneur ne dépasse pas 0,35 % en poids.

Outre le polyéthylène et l'amide d'acide gras saturé, la composition mise en oeuvre dans l'invention peut également contenir de 0 à 0,1 % en poids d'agent lubrifiant auxiliaire choisi parmi les acides gras, les polyols contenant au moins 4 atomes de carbone, les monoéthers de mono- ou polyalcool, les paraffines, les polysiloxanes, les polymères fluorés et leurs mélanges.

La teneur en agent lubrifiant auxiliaire ne dépasse pas 0,1 % en poids. Selon une variante, la composition mise en oeuvre dans l'invention est exempte de lubrifiant auxiliaire tel que défini ci-dessus.

La composition mise en oeuvre dans l'invention peut contenir des additifs usuels tels que les anti-oxydants, les antiacides, les anti-UV, les colorants et les agents antistatiques. La teneur totale en additifs ne dépasse pas 5 % en poids; elle est de préférence inférieure à 4 % en poids.

Les anti-oxydants mis en oeuvre dans la composition sont généralement choisis parmi les anti-oxydants de type phénol encombré, phosphite, phosphonite et leurs mélanges.

Les anti-oxydants de type phénol encombré peuvent être choisis parmi les phénols substitués en position ortho, les 2,6-dialkylphénols, les bisphénols, les amides de bêta-(3,5-di-t-butyl-4-hydroxyphényl)-acide propionique, les esters de bêta-(3,5-di-t-butyl-4-hydroxyphényl)-acide propionique avec des alcools mono- ou polyvalents. Des exemples d'anti-oxydants de type phénol encombré sont le 2,6-di-t-butylparacrésol, le 3,5-triméthyl-2,4,6-tris(3,5-di-t-butyl-4-hydroxybenzyl) benzène, le tris(3,5-di-t-butyl-4-hydroxybenzyl)isocyanurate, le stéaryl bêta-(3,5-di-t-butyl-4-hydroxyphényl)-propionate, le 2,6-di-t-butyl-4-méthylphénol, le pentaérithrityl tétrakis(3,5-di-t-butyl-4-hydroxyphénylpropionate), le bis(bêta-3,5-di-t-butyl-4-hydroxyphényléthyl) subérate, la N,N'-bis((3-(3',5'-di-t-butyl-4'-hydroxyphényl)-propionyl))hexaméthylènediamine.

Les anti-oxydants de type phosphite sont en général choisis parmi les alkyl- et les arylphosphites, et plus particulièrement parmi les triarylphosphites symétriques. Des exemples d'anti-oxydants de type phosphite sont le tris-(2,4-di-t-butylphényl)phosphite, le tris-(2-t-butyl-4-méthylphényl)-phosphite, le tris-p-nonyl-phénylphosphite, le tris(2,4-dinonylphényl)phosphite, le bis (2,4-di-t-butyl)pentaérythritol diphosphite, le distéaryl pentaérythritol diphosphite, le bis(2,4-dicumylphényl) pentaérythritol diphosphite. L'utilisation du tris(2,4-di-t-butyl-phényl)phosphite est très particulièrement recommandée.

Les anti-oxydants de type phosphonite peuvent être choisis parmi les aryl phosphonites, les diphosphonites, et plus particulièrement parmi les aryldiphosphonites. Un exemple d'anti-oxydants de type phosphonite est le tétrakis[2,4-di-t-butylphényl]4,4'-biphénylène diphosphonite.

De bons résultats sont obtenus dans le cas où la composition comprend au moins 0,01 % en poids d'anti-oxydants. La teneur en anti-oxydants ne dépasse généralement pas 1,5 % en poids. De préférence, la composition comprend de 0,02 à 0,5 % en poids d'anti-oxydants.

Les anti-acides mis en oeuvre dans la composition peuvent être choisis parmi les sels d'acides gras (tels que le stéarate de sodium, de calcium ou de zinc), les hydrotalcites, les oxydes métalliques (tels que les oxydes de magnésium, de calcium ou de zinc) et leurs mélanges. Le stéarate de calcium est préféré. La teneur en anti-acide est de préférence inférieure à 3% en poids. Elle est préférentiellement inférieure à 1 % en poids.

Les anti-UV mis en oeuvre dans la composition peuvent être choisis parmi les 2-(2'-hydroxyphényl)-benzotriazoles, les 2-hydroxybenzophénones, les amines encombrées et leurs mélanges. Des exemples de 2-(2'-hydroxyphényl)-benzotriazoles sont le 2-(2'-hydroxy-3',5'-di-t-butylphényl)5-chlorobenzotriazole, le 2-(2'-hydroxy, 3'-t-butyl, 5'-méthylphényl) 5-chlorobenzotriazole, le 2-(2'-hydroxy-3',5'-di-t-amylphényl)benzotriazole. Un exemple de 2-hydroxybenzophénone est le 2-hydroxy-4-n-octoxy-benzophénone. Des exemples d'amines encombrées sont le bis (2,2,6,6,-tetraméthyl-4-piperidyl)sébacate, le polycondensat d'acide succinique et la 1-(2-hydroxyéthyl)-2,2,6,6-tétraméthyl-4-hydroxypipéridine. La teneur en anti-UV est de préférence inférieure à 1 % en poids. Elle est préférentiellement inférieure à 0,5 % en poids.

Les colorants mis en oeuvre dans la composition peuvent être choisis parmi les colorants organiques (tels que les phtalocyanines, les anthraquinones, les mono- et diazos, les diazines, les quinacridones et les indigos) et les colorants inorganiques (tels que les oxydes et les sels métalliques).

Généralement la teneur en colorants ne dépasse pas 4 % en poids. De préférence, leur teneur ne dépasse pas 3,5 % en poids.

Les agents antistatiques mis en oeuvre dans la composition peuvent être choisis parmi les composés cationiques (tels que les sels d'ammonium quaternaires), les composés anioniques (tels que les alkylsulfonates, les alkylsulfates, les alkylphosphates, les dithiocarbamates, les carboxylates de métaux alcalins ou alcalino-terreux); les composés non-ioniques (tels que les esters et les éthers de polyéthylène glycol, les esters d'acides gras, les alkylamines éthoxylées, les mono- et diglycérides, les acides gras éthoxylés et leurs mélanges) et leurs mélanges. Les composés non-ioniques sont préférés. La teneur en agent antistatique est de préférence inférieure à 3 % en poids. Elle est préférentiellement inférieure à 1 % en poids.

La composition est exempte de zéolites. Elle ne contient pas de glycérine.

La composition peut être obtenue selon tout moyen connu adéquat. On peut par exemple procéder en deux étapes successives, la première consistant à mélanger le polyéthylène, l'amide d'acide gras saturé et éventuellement l'agent lubrifiant auxiliaire et un ou plusieurs additifs à température ambiante, la deuxième étape consistant à poursuivre le mélange en fondu dans une extrudeuse. La température de la deuxième étape est généralement de 100 à 300°C, en particulier de 120 à 250°C, en plus particulier d'environ 130 à 210°C. Une méthode alternative consiste à introduire l'amide d'acide gras saturé et éventuellement les autres composés dans le polyéthylène déjà fondu.

On peut aussi préparer, dans un premier temps, un mélange-maître comprenant une première fraction de polyéthylène, l'amide d'acide gras saturé et éventuellement l'agent lubrifiant auxiliaire et les autres additifs, ce mélange-maître étant riche en amide d'acide gras saturé et optionnellement en autres composés. Ce mélange-maître est ensuite mélangé à la fraction restante du polyéthylène, par exemple lors de la fabrication de granules de la composition.

La composition présente à la fois de bonnes propriétés de glissance, qui la rendent apte à être utilisée pour la fabrication de capsules à visser pour bouteilles, et de bonnes propriétés organoleptiques, qui la rendent utilisable dans des applications alimentaires.

La composition convient pour la mise en oeuvre par le procédé d'injection. Elle donne des résultats particulièrement satisfaisants lors de la fabrication de capsules à visser pour bouteilles.

Les capsules pour bouteilles sont susceptibles d'être fabriquées par injection de cette composition. Selon ce procédé, ladite composition, généralement sous forme de granules, est introduite dans une extrudeuse dans laquelle elle est fondue au moyen d'une unité de plastification. On obtient de bons résultats avec des extrudeuses monovis. Les températures du fourreau et de la vis sont généralement comprises entre 100°C et 300°C, particulièrement entre 130°C et 270°C, plus particulièrement entre 200°C et 250°C. Pendant la phase de plastification, la composition mise en oeuvre dans l'invention à l'état fondu est accumulée devant la pointe de la vis. Ensuite, elle est injectée rapidement dans un moule refroidi. Directement après cette phase de remplissage, la composition est maintenue sous pression afin de compenser son retrait. Après un refroidissement court, les objets façonnés sont éjectés lors de l'ouverture du moule. Les capsules fabriquées par ce procédé conviennent pour être utilisées pour la fermeture de bouteilles, plus particulièrement pour des bouteilles contenant des aliments.

Les exemples dont la description suit, servent à illustrer l'invention.

Les exemples 2 et 3 sont donnés à titre comparatif. La signification des symboles utilisés dans ces exemples, les unités exprimant les grandeurs mentionnées et les méthodes de mesure de ces grandeurs sont explicitées ci-dessous.
MI₂= indice de fluidité du polyéthylène, exprimé en g/10 min, mesuré à 190°C sous une charge de 2,16 kg selon la norme ASTM D 1238 (1998).
MVS = masse volumique standard du polyéthylène, exprimé en kg/m³, mesurée selon la norme ISO 1183-3 (1999).
OT = couple d'ouverture, mesuré selon la méthode suivante :
Dix capsules sont vissées sur des bouteilles en verre de 33 cl à l'aide d'une machine de laboratoire mono tête Zalkin et de façon à fermer les capsules d'un angle de rotation constant de 540° correspondant à 1,5 tours. On mesure le couple de dévissage. La valeur OT est la moyenne des valeurs obtenues sur les dix capsules. Ce test est effectué 1 semaine (OT₁) et 3 semaines (OT₃) après la fabrication des capsules.
OI = indice d'organolepticité, mesuré selon la méthode suivante :
33 g de la composition à base de polyéthylène sous forme de granules sont mis en suspension dans 1 l d'eau pendant 4 heures à 60°C.
   Ensuite, 6 opérateurs différents goûtent l'eau de la suspension qui est refroidie à température ambiante et apprécient son goût. Ils donnent chacun une note de 1 à 4 en comparant à un échantillon d'eau ayant subi le même traitement en l'absence de granules ou de plaques, la note de 1 correspondant au goût de cet échantillon d'eau. Une note élevée correspond à un mauvais goût. L'indice d'organolepticité (OI) est la moyenne des notes des 6 opérateurs.
OIS = indice d'organolepticité après exposition au soleil, mesuré selon la méthode suivante :
Des bouteilles de 33 cl en verre sont remplies avec de l'eau et munies de capsules injectées 1 semaine auparavant. Ces bouteilles sont exposées pendant 42 heures à 40°C à 550 Watt/m² au spectre solaire dans un appareil Sun test. Ensuite, le goût de l'eau est testé selon la même méthode que celle décrite ci dessus pour la détermination de l'OI.

### Exemple 1 (conforme à l'invention)

Dans une extrudeuse, on a mélangé (à 190°C) et granulé une composition constituée de :
- 99,4 parties en poids de polyéthylène (contenant environ 0,4 % mol de butène-1) caractérisé par un MI₂ de 1,9 g/10 min et une MVS de 952 kg/m³;
- 0,2 partie en poids d'agent anti-acide (stéarate de calcium);
- 0,1 partie en poids d'agent anti-oxydant [tris(2,4-di-t-butylphényl)phosphite];
- 0,1 partie en poids d'agent anti-UV [polycondensat d'acide succinique et de 1-(2-hydroxyéthyl)-2,2,6,6-tétraméthyl-4-hydroxypipéridine];
- 0,2 partie en poids de béhénamide (docosonamide).

Les granules présentaient un OI de 1,3.

Des capsules à visser sont fabriquées par moulage-injection sur une machine Netstal équipée d'un moule à 18 cavités.

Les capsules obtenues à partir de la composition présentaient un OT₁ de 1,98 Nm et un OT₃ de 1,47 Nm. La valeur de OIS mesurée sur des capsules était de 1,7.

### Exemple 2 (à titre de comparaison)

On a répété les opérations de l'exemple 1 en remplaçant la 0,2 partie en poids de béhénamide par un mélange de 0,08 partie en poids d'érucamide (13-docosénamide) et 0,12 partie en poids de béhénamide.

Les granules présentaient un OI de 2,0.

Les capsules à visser obtenues à partir de la composition présentaient un OT₁ de 2,1 Nm et un OT₃ de 1,70 Nm. La valeur de OIS mesurée sur des capsules était de 2,2.

### Exemple 3 (à titre de comparaison)

On a répété les opérations de l'exemple 1 en remplaçant la 0,2 partie en poids de béhénamide par 0,2 partie en poids d'érucamide (13-docosénamide).

Les granules présentaient un OI de 2,7.

Les capsules à visser obtenues à partir de la composition présentaient un OT₁ de 1,64 Nm et un OT₃ de 0,96 Nm. La valeur de OIS mesurée sur des capsules était de 2,7.

Une comparaison des résultats des exemples 2 et 3 avec celui de l'exemple 1 fait apparaître le progrès apporté par l'invention pour ce qui concerne les propriétés organoleptiques.

## Revendications

1. Capsule à visser pour bouteilles susceptible d'être fabriquée par injection d'une composition constituée d'au moins 94.5 % en poids d'un polyéthylène ayant une masse volumique standard supérieure à 940 kg/m³, de 0,08 à 0,5 % en poids d'au moins un amide d'acide gras saturé contenant de 8 à 30 atomes de carbone, de 0 à 0,1 % en poids d'agent lubrifiant auxiliaire choisi parmi les acides gras, les polyols contenant au moins 4 atomes de carbone, les monoéthers de mono- ou polyalcool, les paraffines, les polysiloxanes, les polymères fluorés et leurs mélanges, 0 à 5 % en poids d'un ou plusieurs additifs choisi(s) parmi les anti-oxydants, les anti-acides, les anti-UV, les colorants et les agents antistatiques, la somme des pourcentages relatifs aux composés susmentionés étant égale à 100%.

2. Capsule à visser selon la revendication 1, dans laquelle l'amide d'acide gras saturé est choisi parmi les amides d'acides gras saturés linéaires contenant au moins 12 atomes de carbone, et leurs mélanges.

3. Capsule à visser selon la revendication 2, dans laquelle l'amide d'acide gras est le béhénamide.

4. Capsule à visser selon l'une quelconque des revendications 1 à 3, dans laquelle la teneur en amide d'acide gras saturé ne dépasse pas 0,4 % en poids.

5. Capsule à visser selon l'une quelconque des revendications 1 à 4, dans laquelle le polyéthylène a une masse volumique standard de 948 à 960 kg/m³.

6. Capsule à visser selon l'une quelconque des revendications 1 à 5, dans laquelle le polyéthylène a un indice de fluidité MI₂ d'au moins 0,05 g/10 min et qui ne dépasse pas 10 g/10 min.

7. Capsule à visser selon l'une quelconque des revendications 1 à 6, dans laquelle la teneur en anti-oxydants est d'au moins 0,01 % en poids.

8. Capsule à visser selon l'une quelconque des revendications 1 à 7 exempte d'un agent lubrifiant auxiliaire.

## Patentansprüche

1. Schraubverschluss für Flaschen, der durch Injektion einer Zusammensetzung herstellbar ist, bestehend zu mindestens 94,5 Gew.-% aus einem Polyethylen mit einer Standarddichte von mehr als 940 kg/m³, 0,08 bis 0,5 Gew.-% aus mindestens einem gesättigten Fettsäureamid, das 8 bis 30 Kohlenstoffatome enthält, 0 bis 0,1 Gew.-% aus Hilfsgleitmittel, das aus Fettsäuren, Polyolen, die mindestens 4 Kohlenstoffatome enthalten, Mono- oder Polyalkoholmonoethern, Paraffinen, Polysiloxanen, fluorierten Polymeren und deren Mischungen ausgewählt ist, 0 bis 5 Gew.-% aus einem oder mehreren Additiven, die aus Antioxidantien, Antaziden, UV-Schutzmitteln, Färbemitteln und antistatischen Mitteln ausgewählt sind, wobei die Summe der Prozentsätze in Bezug auf die oben erwähnten Verbindungen gleich 100 % ist.

2. Schraubverschluss nach Anspruch 1, wobei das gesättigte Fettsäureamid aus linearen gesättigten Fettsäureamiden, die mindestens 12 Kohlenstoffatome enthalten, ausgewählt ist.

3. Schraubverschluss nach Anspruch 2, wobei das Fettsäureamid Behenamid ist.

4. Schraubverschluss nach einem der Ansprüche 1 bis 3, wobei der Gehalt an gesättigten Fettsäureamiden 0,4 Gew.-% nicht übersteigt.

5. Schraubverschluss nach einem der Ansprüche 1 bis 4, wobei das Polyethylen eine Standarddichte von 948 bis 960 kg/m³ aufweist.

6. Schraubverschluss nach einem der Ansprüche 1 bis 5, wobei das Polyethylen einen Schmelzflussindex MI₂ von mindestens 0,05 g/10 Min. aufweist, der 10 g/10 Min. nicht übersteigt.

7. Schraubverschluss nach einem der Ansprüche 1 bis 6, wobei der Gehalt an Antioxidantien mindestens 0,01 Gew.-% beträgt.

8. Schraubverschluss nach einem der Ansprüche 1 bis 7 frei von einem Hilfsgleitmittel.

## Claims

1. Screw cap for bottles capable of being manufactured by injecting a composition comprised of at least 94.5% by weight of a polyethylene having a standard volumetric mass greater than 940 kg/m³, from 0.08 to 0.5% by weight of at least one saturated fatty acid amide containing from 8 to 30 carbon atoms, from 0 to 0.1% by weight of an auxiliary lubricant chosen from fatty acids, polyols containing at least 4 carbon atoms, monoethers of mono- or polyalcohol, paraffins, polysiloxanes, fluorinated polymers and mixtures thereof, 0 to 5% by weight of one or several additives chosen from antioxidants, antacids, anti-UV, coloring agents and antistatic agents, with the sum of the percentages relating to the aforementioned compounds being equal to 100%.

2. Screw cap according to claim 1, wherein the saturated fatty acid amide is chosen from linear saturated fatty acid amides containing at least 12 carbon atoms, and mixtures thereof.

3. Screw cap according to claim 2, wherein the fatty acid amide is behenamide.

4. Screw cap according to any of claims 1 to 3, wherein the saturated fatty acid amide content does not exceed 0.4% by weight.

5. Screw cap according to any of claims 1 to 4, wherein the polyethylene has a standard volumetric mass from 948 to 960 kg/m³.

6. Screw cap according to any of claims 1 to 5, wherein the polyethylene has a meltflow index MI₂ of at least 0.5 g/10 min and which does not exceed 10 g/10 min.

7. Screw cap according to any of claims 1 to 6, wherein the antioxidant content is at least 0.01% by weight.

8. Screw cap according to any of claims 1 to 7 devoid of an auxiliary lubricant.
